# EUROPEAN PATENT SPECIFICATION

(11) **EP 1 397 598 B1**
(45) Date of publication and mention of the grant of the patent: **15.03.2006**
(21) Application number: 02744481.9
(22) Date of filing: 20.06.2002
(51) Int. Cl.: F16B 2/10

(54) **CAPPED CLIP FOR PIPE, ELECTRIC CABLE OR THE LIKE**
BEDECKTER CLIP FÜR ROHR, ELEKTRISCHE LEITUNG ODER BEREICHSGLEICHE ERFINDUNG
ATTACHE A COIFFE POUR TUYAU, CABLE ELECTRIQUE OU ANALOGUE

(30) Priority: 22.06.2001 JP 2001190150
(43) Date of publication of application: 17.03.2004
(73) Proprietor: Newfrey LLC, Newark, Delaware 19711 (US)
(72) Inventor: SHIBUYA, Tomio, Toyohashi-shi, Aichi-ken (JP)
(74) Representative: Haar, Lucas Heinz Jörn
(86) International application number: PCT/US2002/019552
(87) International publication number: WO 2003/001069

(56) References cited:
- EP-A- 0 736 713
- EP-A- 0 933 575
- DE-C- 19 939 081
- US-A- 4 478 381
- PATENT ABSTRACTS OF JAPAN vol. 1998, no. 14, 31 December 1998 (1998-12-31) & JP 10 259884 A (PIOLAX INC), 29 September 1998 (1998-09-29) cited in the application

## Description

### FIELD OF THE INVENTION

The present invention relates to a clip for fixing an elongated member, such as a pipe, electric cable or the like used in an automobile, electric equipment, consumer electric appliance, industrial machine or the like, to an automobile body, or another workpiece. In particular, the present invention relates to a capped clip or a clip having a cap for fixing an elongate member, such as a pipe, electric cable or the like, to a workpiece.

### BACKGROUND OF THE INVENTION

A capped clip for fixing an elongate member, such as a pipe, electric cable or the like, to a workpiece such as an automobile body is known. Some examples of such capped clips are disclosed in Japanese Patent Laid-Open No. 51-070489, Japanese Utility Model Laid-Open No. 58-186277 and Japanese Utility Model Laid-Open No. 63-077184. The clip of the Japanese Patent Laid-Open No. 51-070489 comprises a pair of semicircular members; one serves as a fixing portion to be fixed to a workpiece, and the other serves as a cap portion. These semicircular members are connected with each other through a hinge, and the cap member is pivoted about the hinge to be closed to hold a cable therein. This clip can advantageously hold the cable simply by pivoting the cap member about the hinge. However, when a certain force is applied to the closed cap member in the direction causing pulling out of the cable, the cap member could be undesirably deformed to come out of an engagement portion. The capped clip of the Japanese Utility Model Laid-Open No. 58-186277 includes a cap member capable of pivoting about a shaft of a fixing member, and the cap member and the fixing member are formed separately as two components. Thus, as compared to an integrally molded structure as a one-piece component, this clip needs a larger number of molding dies and man-hours for its molding and assembling processes. In the clip of the Japanese Utility Model Laid-Open No. 63-077184, a fixing portion and a cap portion are integrally formed with each other. However, the clip is constructed to fix one of the ends of the cap portion by a pivot when the cap portion is in its closed position. This can cause excessive play in the pivot portion, resulting in unstable movement of clips held in the clip.

In addition to the capped clips described above, Japanese Utility Model Laid-Open No. 55-120873, Japanese Design Registration No. 595528 and Japanese Patent Laid-Open No. 10-030750 disclose other capped clips. These clips are integrally molded in a one-piece, and each of the clips includes a fixing portion to be fixed to a workpiece, a clamp portion having a pair of clamp arms standing from the fixing portion in an approximate U-shape to define a U-shaped holding section for holding an elongated member such as a pipe, electric cable or the like, and a cap portion for closing an opening of the clamp portion. These capped clips are adapted to hold the elongated member by inserting the elongated member from the opening of the clamp portion and then closing the opening with the cap portion. In these clips, the cap portion and the clamp portion are integrally formed to connect with each other through a hinge. Further, additional engagement portions other than the hinge are formed in both the cap portion and the fixing portion at a position adjacent to the hinge, so that, after the cap portion is pivoted about the hinge to fix the cap portion in its closed position, the cap portion is firmly fixed in the closed position. In these clips, if the electric cable or pipe held in the clamp portion is moved in the longitudinal direction of the electric cable or pipe relative to the clamp portion, the cap portion in frictional contact with the clamp portion can be moved relative to the clamp portion in the longitudinal direction. When the movement distance goes over a certain limit, the engagement portion of the cap portion adjacent to the hinge can be released from the corresponding engagement portion of the clamped portion, and consequently the electric cable or pipe will undesirably come out of the clip.

Further, Japanese Patent Laid-Open No. 10-259884 discloses a capped clip including a fixing portion to be fixed to a workpiece, a semicircular clamp portion for holding an elongated member such as a pipe, electric cable or the like, and a semicircular cap portion for closing an opening of the clamp portion with the clip being integrally molded in a one-piece component. This capped clip is adapted to hold the elongated member by inserting the elongated member from the opening of the damp portion and then dosing the opening with the cap portion. In this capped clip, one of the sides of the cap portion is connected to one of the sides of the clamp portion through a thin hinge allowing the cap portion to be pivoted to close the opening of the clamp portion. The other side of the cap portion is formed with a first engagement portion adapted to engage with a second engagement portion formed in the other side of the clamp portion, so as to keep the cap portion in its held position. Further, a protrusion is formed on the outer surface of the clamp portion adjacently to the hinge, and the cap portion is formed with a recess for receiving the protrusion therein when the cap portion is dosed, to allow the cap portion to be firmly fixed in its closed position. This dip is formed with step portions allowing the cap portion in frictional contact with the damp portion to be constrained by the clamp portion when the electric cable or pipe held in the damp portion is moved in the longitudinal direction of the electric cable or pipe relative to the clamp portion, so that the cap portion is not moved in the longitudinal direction. However, these step portions are provided at two positions apart from each other along the circumferential direction of the semicircular clamp portion and the semicircular cap portion, resulting in complicated configuration and increased cost of molding dies therefor.

From US-A-4478381 an elastic pipe dip of a moldable and flexible plastic material is known, comprising the features of the preamble of claim 1. The dip consists of a lower clamp portion and a upper cap portion for closing and opening of that clamp portion joined in pivotable manner by a hinge-band. Hooks are located on the inner surface of the free end of the upper cap portion, which are formed to engage with mating hooks on the outer surface of the free end of the lower clamp portion. When the pipe clip is closed about a pipe the hooks are snapped together, thereby requiring an elastic deformation of the cap portion. To re-open the clip in case of need the snapping hooks at the cap portion have to be pressed away against the deformation resistance of the cap portion. This requires a particular tool and effort.

It is therefore an object of the present invention to provide a capped clip for a pipe, electric cable or the like, capable of being closed with low effort, of keeping a cap portion of the clip in its closed position, and allowing the cap portion to be released in its open position by the action of a finger, a screwdriver or the like.

### SUMMARY OF THE INVENTION

In order to achieve the above object, according to the present invention, there is provided a capped clip for a pipe, electric cable or the like, comprising a fixing portion to be fixed to a workpiece, a clamp portion having a pair of clamp arms standing from the fixing portion in an approximate U-shape to define a U-shaped holding section for holding an elongated member such as a pipe, electric cable or the like, and a cap portion for dosing an opening of the damp portion with the fixing, damp and cap potions being integrally molded to form one piece, wherein the capped dip is adapted to hold the elongated member by inserting the elongated member into the opening of the clamp portion and then closing the opening with the cap portion. The capped clip according to the present invention further comprises: a thin hinge connecting the cap portion to the outer surface of a first one of the damp arms to allow the cap portion to be pivotally moved about the hinge to dose the opening of the clamp portion; a first engagement portion formed in the cap portion and adapted to engage with a second engagement portion formed in a second one of the damp arms to keep the cap portion in its dosed position; a protrusion formed at the opening-side end of the first clamp arm having the thin hinge, the protrusion protruding outward from the holding section; a recess formed in the cap portion at a position corresponding to the protrusion of the first clamp arm, the recess being adapted to receive the protrusion therein when the cap portion is Pivotally moved to its dosed position; an engagement shoulder formed in the recess and adapted to engage with the protrusion to lock the cap portion in its dosed position when the cap portion is in the dosed position; and a pair of walls defining a portion of the recess to be located on the opposite sides of the protrusion in the longitudinal direction of the elongated member, the walls being adapted to confine the protrusion to prevent it from coming out of the recess even if the cap portion is forced to move with respect to the clamp portion in either longitudinal direction of the elongated member received in the holding section when the cap portion is in its closed position characterised in that, the second engagement portion is formed as a receiving hole for receiving the first engagement portion and is formed with an engagement shoulder adapted to engage with the first engagement portion fitted into the receiving hole, wherein the first engagement portion is formed as a flexible or resilient engagement pawl to be inserted into the receiving hole of the second engagement portion to engage with the second engagement portion to keep the cap portion in its dosed position: and
characterised in that the flexible engagement pawl of the first engagement portion is provided with a release lever which can be pushed with a finger, a screwdriver or the like to release the above engagement with the second engagement portion.

By virtue of the above structure, when the recess receives the protrusion of the arm of the damp portion, the engagement shoulder engages with the protrusion to keep the cap portion in its closed position reliably. Further, the opposite walls constrain the relative movement between the protrusion and the recess so that the cap portion is not moved with respect to the clamp portion in the longitudinal direction so as to keep the closed position. Furthermore, since both the engagement shoulder and the walls are defined only in the recess, a molding die therefor can be simplified in configuration and reduced in cost.

In the capped clip described above, the protrusion of the first clamp arm may have a certain thickness in the height direction of the U-shaped clamp portion, and the recess of the cap portion may have a height equal to or slightly smaller than the thickness of the protrusion. Even if the protrusion has a slightly smaller thickness than that of the recess, the recess can receive the protrusion therein due to leverage of the cap potion when the cap portion is pivoted about the hinge to be closed. This allows the protrusion to be fitted into the recess without any loosening. Thus, the cap portion is more reliably kept in its dosed position without any undesirable movement Further, the engagement shoulder of the cap portion may be formed to be brought into surface contact with the protrusion when the cap portion is in its closed position. This allows the cap portion to be more firmly kept In its closed position. Furthermore, the recess of the cap portion may be formed as a hole which is hollowed from the outside of the cap portion to allow the protrusion to be received and to provide both the engagement shoulder and the walls therein. The hole may be in communication with an opening formed in the cap portion on the inside thereof to allow the protrusion to be inserted therethrough during the pivotal movement of the cap portion. This allows the recess to be formed as intended by using a simplified molding die.

### BRIEF DESCRIPTION OF THE DRAWINGS

Fig. 1 is a top plan view of a clip according to the present invention when a cap portion of the clip is in its open position.
Fig. 2 is a front view of the clip in Fig. 1.
Fig. 3 is a right side view of the clip in Fig. 1.
Fig. 4 is a front view of the clip that by using the clip in Fig. 1, a pipe is fixed to an automobile body or the like and the cap portion is closed.
Fig. 5 is a sectional view of the clip taken along the line A-A of Fig. 4.
Fig. 6 is a perspective view showing the relationship between a recess portion of the cap portion and a protrusion of a clamp portion in the clip of Fig. 1.

### DETAILED DESCRIPTION OF THE PREFERRED EMBODIMENT

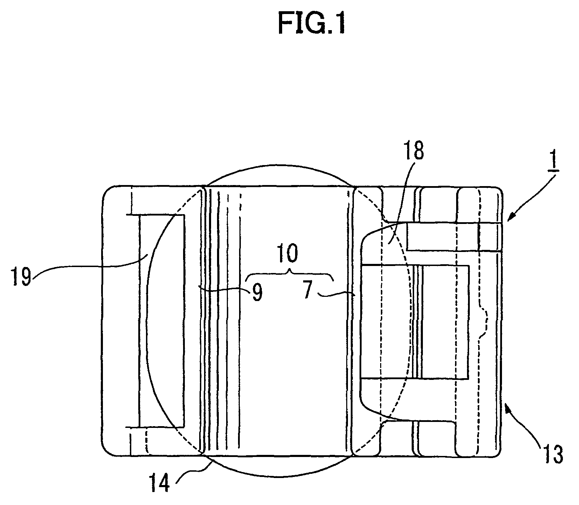

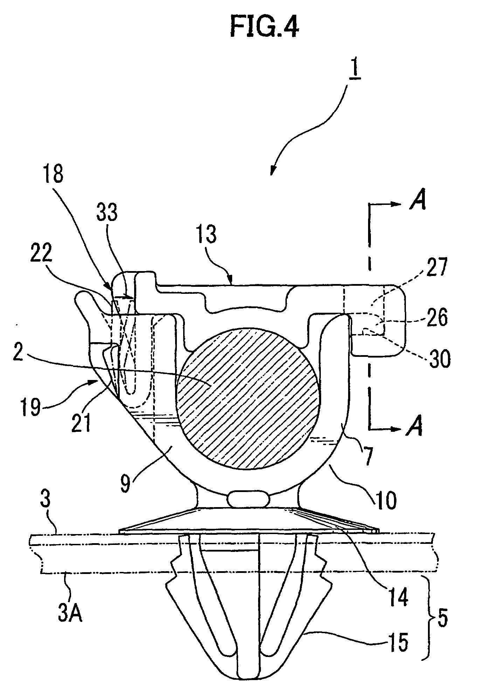

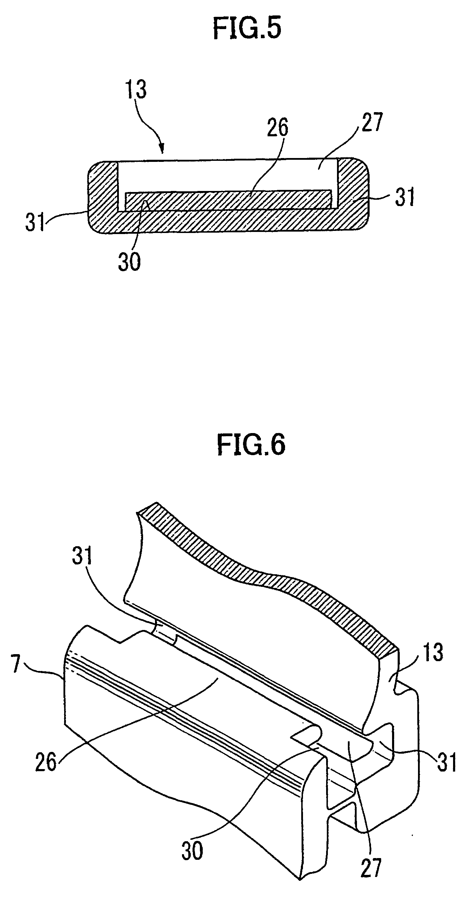

With reference to the drawings, a capped clip according to the present invention will be described. Figs. 1 to 3 are a top plan view, front view, and right side view showing a capped clip 1 before a cap portion of the clip is closed, respectively. Fig. 4 is a front view of the capped clip 1 under the condition that a pipe 2 as an elongated member is fixed to a workpiece such as an automobile body 3 (and additional panel 3A) by using the capped clip 1. Fig. 5 is a sectional view of the clip 1 taken along the line A-A of Fig. 4. Fig. 6 illustrates the relationship between a recess portion of the cap portion and a protrusion of a clamp portion in the capped clip 1 before the cap portion is closed.

The capped clip 1 according to the present invention is an integrally molded component of plastic material. Referring to Figs. 1 to 3, the capped clip 1 includes a fixing portion 5 to be fixed to a workpiece (automobile body 3 or the like), a clamp portion 10 having a pair of clamp arms 7, 9 standing from the fixing portion 5 in an approximate U-shape to define a U-shaped holding section 6 for holding an elongated member such as a pipe 2, and a cap portion 13 for closing an opening 11 1 of the clamp portion 10. Based on this structure, the clip holds the elongated member such as a pipe or an electric cable by inserting the elongated member into the opening 11 of the clamp portion 10 and then closing the opening 11 with the cap portion 13. As can be seen in Figs. 1 to 3, in order to hold the elongate member such as a pipe, each of the cap portion 13 and the clamp portion 14 is formed to have a certain length in the longitudinal direction of the pipe or the like held therein. In the illustrated embodiment, the fixing portion 5 comprises a flange 14 and an anchor leg 15 to be inserted into a mounting hole formed in the automobile body 3 (and the panel 3A) as the workpiece and attached to the automobile body 3. The fixing portion 5 may be formed in any other suitable configuration allowing the fixing portion to be fixed to an intended workpiece. For example, when a stud is fixedly provided on the workpiece, the fixing portion 5 will be formed as a stud engagement portion to be fixed to the stud. In that case, if the stud is a T-stud or a stud bolt, the fixing portion is variously formed in a configuration in conformity therewith.

The cap portion 13 is connected with the outer surface of the first one 7 of the clamp arms of the clamp portion 10 through a thin hinge 17. The hinge 17 allows the cap portion 13 to be pivotally moved to close the opening 11 of the clamp portion 11. A cap engagement portion 18 is formed in the cap portion 13 on the opposite side to the hinge 17. Further, a clamp engagement portion 19 is formed in the second one 9 of the clamp arms to receive the cap engagement portion 18 therein and engage with the cap engagement portion 18. In the illustrated embodiment, the clamp engagement portion 19 is formed as a receiving hole for receiving the cap engagement portion and is formed with an engagement shoulder 20 adapted to engage with the cap engagement portion fitted into the receiving hole. The cap engagement portion 18 is formed as an flexible or resilient engagement pawl 21 to be inserted into the clamp engagement portion 19. Thus, when inserted into the clamp engagement portion 19, the flexible engagement pawl 21 engages with the clamp engagement portion 19 to keep the cap portion 13 in its closed position. The flexible engagement pawl 21 of the cap engagement portion 18 is provided with a release lever 22 which can be pushed with a finger, a screwdriver or the like to release the above engagement. The inside surface of the cap portion 13 is formed with a pressing portion 23 having a configuration for pressing and holding the pipe 2 or the like received in the holding section 6 of the clamp portion 10. A reinforcing rib 25 is provided on the outer surface of the cap portion 13 to maintain the rigidity of the cap portion 13 in high level.

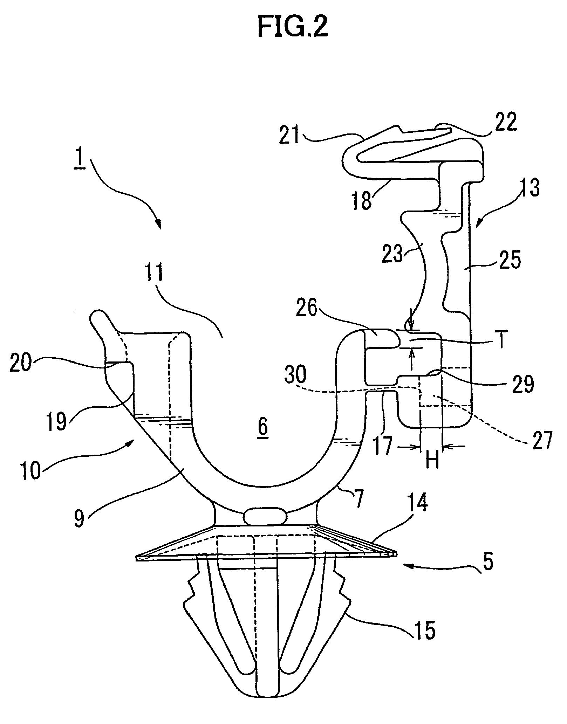

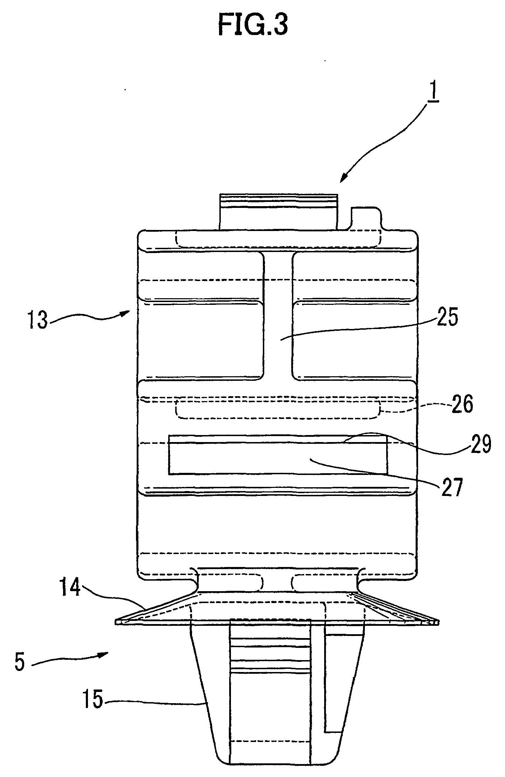

As shown in Fig. 2, a protrusion 26 is formed at the upper end of the opening 11 and the side of the first clamp arm 7 having the thin hinge 17. The protrusion 26 protrudes outward from the U-shaped holding section 6. As shown by the broken line of Fig. 3, the distance between the right and left sides of the protrusion 26 is made shorter than the width of the cap portion 13. Further, a recess 27 is formed in the cap portion 13 at a position corresponding to the protrusion 26. The recess 27 can receive the protrusion 26 therein when the cap portion 13 is pivotally moved to its closed position. The recess 27 can be formed as a hole which is hollowed from the outside of the cap portion 13 to allow the protrusion 26 to be received therein. Thus, a molding die therefor can be simplified in configuration, and a simple split die set can be used. The hollowed hole is in communication with an opening 29 (see Figs. 2 and 3) formed in the cap portion on the inside thereof to allow the protrusion 26 to be inserted therethrough during the pivotal movement of the cap portion 13, so as to provide the recess 27. Fig. 6 shows the relationship between the protrusion 26 and the recess 27 in detail. The recess 27 is formed with an engagement shoulder 30 adapted to engage with the protrusion 26 to lock the cap portion 13 in its closed position when the cap portion 13 is in the closed position. The engagement shoulder 30 is formed to be brought into surface contact with the under surface of the protrusion 26 when the cap portion 13 is in its closed position. Further, a pair of walls 31 are provided to define a portion of the recess 27 to be located on the opposite sides of the protrusion in the longitudinal of the elongated member such as the pipe 2 held in the holding section 6 when the cap portion 13 is in its closed position. The walls 31 are formed to prevent the protrusion 26 from coming out of the recess 27 even if the cap portion 13 is forced to move in either the above longitudinal direction relative to the clamp portion 10 when the cap portion 13 is in its closed position. These walls 31, 31 are also shown in Fig. 5 which is a sectional view of the clip 1 taken along the line A-A of Fig. 4 under the condition that the pipe 2 is fixed to the automobile body 3 (and the additional panel 3A) by using the capped clip 1.

Fig. 4 shows that the pipe 2 as an elongated member is fixed to the automobile body 3 (and the additional panel 3A) as a workpiece by using the capped clip 1 having the aforementioned structure. The clip 1 is fixed to the automobile body 3 or the like by inserting the fixing portion 5 into each mounting hole of the automobile body 3 and the additional panel 3A. The pipe 2 is received in the U-shaped holding section of the clamp portion 10. The cap portion 12 is pivotally moved about the hinge 17, and the cap engagement portion 18 engages with the clamp engagement portion 19 to keep the cap portion in its closed position. In the course of the pivotal movement of the cap portion 13, the recess 27 receives the protrusion 26 of the clamp arm 7 and brings the under surface of the protrusion 26 into surface contact with the engagement shoulder 30 of the recess 27. This allows the cap portion to be reliably kept in its closed position without any contribution of the hinge 17. In this manner, after the protrusion 26 is retained by the recess 27 through the pivotal movement of the cap portion 13, the thin hinge 17 will be exonerated from the responsibility for keeping the cap portion 13 in its closed position, and thereby any problem will be not caused even if the thin hinge 17 is broken.

As shown in Fig. 2, the protrusion 26 has a certain thickness T in the height direction of the clamp portion 10. Correspondingly, the recess 27 of the cap portion preferably has a height H equal to or slightly smaller than the thickness T of the protrusion 26. Even if the thickness T of the protrusion 26 is slightly larger than the height H of the recess, the cap portion 13 can insert the protrusion 26 into the recess 27 by virtue of leverage of the cap portion arising when the cap portion 13 is pivotally moved about the hinge 17 to its closed position. This allows the protrusion 26 to be fitted into the recess 27 without any loosening. Thus, the cap portion is more reliably kept in its closed position without any undesirable movement.

Further, in the recess 27 to receive the protrusion 26 of the clamp portion 10, the opposite walls 31, 31 confine the protrusion 26 to prevents it from moving in the longitudinal direction of the pipe. Thus, even if the pipe 2 is moved in the longitudinal direction thereof and consequently the cap portion 13 is frictionally forced to move in the same longitudinal direction, the cap portion 13 is constrained by the clamp portion 10 so as not to move in the longitudinal direction. This condition is shown in Fig. 5. In Fig. 5, the protrusion 26 is fixed, and thereby even if the cap portion 13 is forced to move rightward or leftward, this movement is blocked by the left-side or right-side wall 31. Thus, the cap potion 13 can keep its closed position and prevent the pipe 2 from coming out. For detaching the pipe 2, the cap engagement portion 18 is released from the clamp engagement portion 19 by turning the release lever 22 in a direction shown by an arrow 33 in Fig. 4, and then the cap portion 13 can be pivotally moved to its open position.

According to the capped clip of the present invention, when the recess receives the protrusion of the arm of the clamp portion, the engagement shoulder engages with the protrusion to keep the cap portion in its closed position reliably. Further, the walls located on the opposite sides of the protrusion constrain the relative movement between the protrusion and the recess. Thus, the cap portion is not move relative to the clamp portion in the longitudinal direction so as to keep the closed position. Furthermore, since both the engagement shoulder and the walls are defined only in the recess, a molding die therefor can be simplified in configuration and reduced in cost.

## Claims

1. A capped dip (1) for holding an elongated member such as a pipe, electric cable or the like, comprising a fixing portion (5) to be fixed to a workpiece, a clamp portion (10) having a pair of damp arms (7,9) standing from said fixing portion (5) in an approximate U-shape to define a U-shaped holding section for holding said elongated member, and a cap portion (13) for dosing an opening (11) of said clamp portion (10) with said fixing, clamp and cap potions (5, 10, 13) being integrally molded to form one piece, wherein said capped clip (1) is adapted to hold said elongated member by inserting said elongated member Into the opening (11) of said clamp portion (10) and then closing said opening with said cap portion (13), said capped dip (1) further comprising:
a thin hinge (17) connecting said cap portion (13) to the outer surface of a first one (7) of said clamp arms (7,9) to allow said cap portion (13) to be pivotally moved about said hinge (17) to close the opening (11) of said clamp portion (10);
a first engagement portion (18) formed in said cap portion (13) and adapted to engage with a second engagement portion (19) formed in a second one (9) of said damp arms (7,9) to keep said cap portion (13) in its closed position;
a protrusion (26) formed at the opening-side end of said first damp arm having said thin hinge (17), said protrusion (26) protruding outward from said holding section:
a recess (27) formed in said cap portion (13) at a position corresponding to said protrusion (26) of said first clamp arm (7), said recess (27) being adapted to receive said protrusion (26) therein when said cap portion (13) is pivotally moved to its closed position;
an engagement shoulder (30) formed in said recess (27) and adapted to engage with said protrusion (26) to lock said cap portion (13) in its closed position when said cap portion (13) is in said closed position; and
a pair of walls (31) defining a portion of said recess (27) to be located on the opposite sides of said protrusion (26) in the longitudinal direction of the elongated member, said walls (31) being adapted to confine said protrusion (26) to prevent it from coming out of said recess (27) even if said cap portion (13) is forced to move with respect to said damp portion (10) in either longitudinal direction of said elongated member received in said holding section when said cap portion (13) is in its dosed position, **characterised in that**
the second engagement portion (19) is formed as a receiving hole for receiving the first engagement portion (18) and is formed with an engagement shoulder (20) adapted to engage with the first engagement portion (18) fitted into the receiving hole, wherein the first engagement portion (18) is formed as a flexible or resilient engagement pawl (21) to be inserted into the receiving hole of the second engagement portion (19) to engage with the second engagement portion (19) to keep the cap portion (13) in its closed position; and wherein the flexible engagement pawl (21) of the first engagement portion (18) is provided with a release lever (22) which can be pushed with a finger, a screwdriver or the like to release the above engagement with the second engagement portion (19).

2. A capped clip as defined in claim 1, wherein said protrusion (26) of said first damp arm (7) has a thickness (T) in the height direction of said U-shaped clamp portion (10), and said recess (27) of said cap portion (13) has a height (H) equal to or slightly smaller than said thickness of said protrusion (26).

3. A capped clip as defined in claim 1, wherein said engagement shoulder (30) of said cap portion (13) is formed to be brought into surface contact with said protrusion (26) when said cap portion (13) is in its closed position.

4. A capped clip as defined in claim 1, wherein said recess (27) of said cap portion (13) is formed as a hole which is hollowed from the outside of said cap portion (13) to allow said protrusion (26) to be received and to provide both said engagement shoulder (30) and said walls (31) therein, said hole being in communication with an opening (29) formed in said cap portion (13) on the inside thereof to allow said protrusion (26) to be inserted therethrough during the pivotal movement of said cap portion (13).

## Patentansprüche

1. Clip (1) mit Kappe zur Halterung eines länglichen Bauteils wie eines Rohrs, Stromkabels oder dergleichen, mit einem an einem Werkstück zu befestigenden Befestigungsteil (5), einem Klemmteil (10), das zwei Klemmarme (7, 9) aufweist, die annähernd U-förmig von dem Befestigungsteil (5) abstehen und dabei einen U-förmigen Halteabschnitt zur Halterung des länglichen Bauteils bilden, sowie einem Kappenteil (13), um eine Öffnung (11) des Klemmteils (10) zu verschließen, wobei die Befestigungs-, Klemm- und Kappenteile (5, 10, 13) als ein einstückiges Formteil ausgebildet sind, wobei der Clip (1) mit Kappe das längliche Bauteil haltern kann, indem das längliche Bauteil in die Öffnung (11) des Klemmteils (10) eingeführt und die Öffnung dann mit dem Kappenteil (13) geschlossen wird, wobei der Clip (1) mit Kappe weiterhin umfasst:
ein das Kappenteil (13) mit der Außenseite eines ersten (7) der Klemmarme (7, 9) verbindendes Filmscharnier (17), damit das Kappenteil (13) zum Schließen der Öffnung (11) des Klemmteils (10) um das Scharnier (17) verschwenkt werden kann;
ein in dem Kappenteil (13) ausgebildetes erstes Eingriffsstück (18), das mit einem in einem zweiten (9) der Klemmarme (7, 9) ausgebildeten zweiten Eingriffsstück (19) in Eingriff bringbar ist, um das Kappenteil (13) in seiner Schließstellung zu halten;
einen an dem öffnungsseitigen Ende des das Filmscharnier (17) aufweisenden ersten Klemmarms ausgebildeten Vorsprung (26), der sich von dem Halteabschnitt nach außen erstreckt;
eine in dem Kappenteil (13) ausgebildete Aussparung (27), die dem Vorsprung (26) des ersten Klemmarms (7) entsprechend so positioniert ist, dass sie den Vorsprung (26) aufnehmen kann, wenn das Kappenteil (13) in seine Schließstellung verschwenkt wird;
eine in der Aussparung (27) ausgebildete Anlageschulter (30), die mit dem Vorsprung (26) so in Eingriff bringbar ist, dass das Kappenteil (13) in seiner eingenommenen Schließstellung arretiert wird; und
ein Wandpaar (31), das einen Teil der Aussparung (27) bildet und in Längsrichtung des länglichen Bauteils an den entgegengesetzten Seiten des Vorsprungs (26) anzuordnen ist, wobei die Wände (31) den Vorsprung (26) so begrenzen können, dass er selbst dann nicht aus der Aussparung (27) heraustreten kann, wenn das Kappenteil (13) gegenüber dem Klemmteil (10) in einer der Längsrichtungen des in dem Halteabschnitt aufgenommenen länglichen Bauteils mitbewegt wird, wenn sich das Kappenteil (13) in seiner Schließstellung befindet,
**dadurch gekennzeichnet, dass**
das zweite Eingriffsstück (19) als Aufnahmeöffnung zur Aufnahme des ersten Eingriffsstücks (18) ausgebildet ist und eine Anlageschulter (20) aufweist, die mit dem ersten, in die Aufnahmeöffnung eingesetzten Eingriffsstück (18) in Eingriff bringbar ist, wobei das erste Eingriffsstück (18) als flexible oder federnde Eingriffsklinke (21) ausgebildet ist, die in die Aufnahmeöffnung des zweiten Eingriffsstücks (19) eingesetzt wird, um mit dem zweiten Eingriffsstück (19) in Eingriff zu gelangen, damit das Kappenteil (13) in seiner Schließstellung gehalten wird; und wobei die flexible Eingriffsklinke (21) des ersten Eingriffsstücks (18) mit einem Ausrückhebel (22) versehen ist, der durch Drücken mit einem Finger, einem Schraubenzieher oder dergleichen betätigt werden kann, um den vorgenannten Eingriff mit dem zweiten Eingriffsstück (19) zu lösen.

2. Clip mit Kappe nach Anspruch 1, wobei der Vorsprung (26) des ersten Klemmarms (7) eine Dicke (T) in Richtung der Höhe des U-förmigen Klemmteils (10) aufweist, und die Aussparung (27) des Kappenteils (13) eine Höhe (H) aufweist, die gleich oder geringfügig kleiner als die Dicke des Vorsprungs (26) ist.

3. Clip mit Kappe nach Anspruch 1, wobei die Anlageschulter (30) des Kappenteils (13) so ausgebildet ist, dass sie mit dem Vorsprung (26) in Flächenkontakt steht, wenn sich das Kappenteil (13) in seiner Schließstellung befindet.

4. Clip mit Kappe nach Anspruch 1, wobei die Aussparung (27) des Kappenteils (13) als ein an der Außenseite des Kappenteils (13) offener Hohlraum ausgebildet ist, in dem der Vorsprung (26) aufgenommen werden kann und sowohl die Anlageschulter (30) als auch die Wände (31) vorgesehen sind, wobei der Hohlraum mit einer an der Innenseite des Kappenteils (13) ausgebildeten Öffnung (29) in Verbindung steht, durch die der Vorsprung (26) während der Schwenkbewegung des Kappenteils (13) eingeführt werden kann.

## Revendications

1. Une attache à coiffe (1) pour tenir un organe allongé, tel qu'un tuyau, un câble électrique ou analogue, comprenant une partie de fixation (5), devant être fixée à une pièce d'oeuvre, une partie de griffe (10) comprenant une paire de bras de griffe (7, 9) montant depuis ladite partie de fixation (5), en une forme à peu près en U, pour définir une section de maintien en forme de U devant tenir ledit organe allongé, et une partie de coiffe (13) pour fermer une ouverture (11) de ladite partie de griffe (10) à l'aide desdites parties de fixation de griffe et de coiffe (5, 10, 13) moulées d'une seule pièce pour former un seul élément, dans laquelle ladite attache à coiffe (1) est adaptée pour tenir ledit organe allongé, en insérant ledit organe allongé dans l'ouverture (11) de ladite partie de griffe (10) et en fermant ensuite ladite ouverture avec ladite partie de coiffe (13), ladite attache à coiffe (1) comprenant en outre :
une charnière (17) mince, reliant ladite partie de coiffe (13) à la surface extérieure d'un premier (7) desdits bras de griffe (7, 9), pour permettre à ladite partie de coiffe (13) d'être montée à pivotement autour de ladite charnière (17), pour fermer l'ouverture (11) de ladite partie de griffe (10) ;
une première partie de mise en prise (18), formée dans ladite partie de coiffe (13) et adaptée pour venir en prise avec une deuxième partie de mise en prise (19), formée dans un deuxième (9) desdits bras de griffe (7, 9), pour maintenir ladite partie de coiffe (13) dans sa position fermée ;
une saillie (26), formée à l'extrémité côté ouverture dudit premier bras de griffe ayant ladite charnière (17) mince, ladite saillie (26) se projetant extérieurement depuis ladite section de maintien ;
une cavité (27), formée dans ladite partie de coiffe (13), en une position correspondant à ladite saillie (26) dudit premier bras de griffe (7), ladite cavité (27) étant adaptée pour recevoir ladite saillie (26) en son sein, lorsque ladite partie de coiffe (13) est déplacée par pivotement à sa position fermée ;
un épaulement de mise en prise (30), formé dans ladite cavité (27) et adapté pour venir en prise avec ladite saillie (26), pour verrouiller ladite partie de coiffe (13) dans sa position fermée, lorsque ladite partie de coiffe (13) se trouve dans ladite position fermée ; et
une paire de parois (31), définissant une portion de ladite cavité (27) devant être placée sur les côtés opposés de ladite saillie (26) en direction longitudinale de l'organe allongé, lesdites parois (31) étant adaptées pour confiner ladite saillie (26) pour l'empêcher de sortir de ladite cavité (27), même si ladite partie de coiffe (13) est forcée de se déplacer par rapport à ladite partie de griffe (10), en une direction longitudinale quelconque dudit organe allongé logé dans ladite section de maintien, lorsque ladite partie de coiffe (13) se trouve dans sa position fermée, **caractérisée en ce que**
la deuxième partie de mise en prise (19) est réalisée sous forme d'un trou de logement, devant recevoir la première partie de mise en prise (18) et est munie d'un épaulement de mise en prise (20), adapté pour venir en prise avec la première partie de mise en prise (18) montée dans le trou de logement, dans laquelle la première partie de mise en prise (18) est conformée en cliquet de mise en prise (21) flexible ou élastique, devant être inséré dans le trou de logement de la deuxième partie de mise en prise (19), pour venir en prise avec la deuxième partie de mise en prise (19) pour maintenir la partie de coiffe (13) dans sa position fermée ; et dans laquelle le cliquet de mise en prise (21) flexible de la première partie de mise en prise (18) est muni d'un levier de libération (22) pouvant être poussé par un doigt, un tournevis ou analogue, pour relâcher la mise en prise, indiquée ci-dessus, avec la deuxième partie de mise en prise (19).

2. Une attache à coiffe telle que définie dans la revendication 1, dans laquelle ladite saillie (26) dudit premier bras de griffe (7) présente une épaisseur (T) dans la direction de la hauteur de ladite partie de griffe (10) en forme de U, et ladite cavité (27) de ladite partie de coiffe (13) présente une hauteur (H), égale ou légèrement inférieure à ladite épaisseur de ladite saillie (26).

3. Une attache à coiffe telle que définie à la revendication 1, dans laquelle ledit épaulement de mise en prise (30) de ladite partie de coiffe (13) est conformé pour être amené en contact de surface avec ladite saillie (26), lorsque ladite partie coiffe (13) est dans sa position fermée.

4. Une attache à coiffe telle que définie dans la revendication 1, dans laquelle ladite cavité (27) de ladite partie de coiffe (13) est munie d'un trou, creusé à partir de l'extérieur de ladite partie de coiffe (13), pour permettre à ladite saillie (26) d'être logée et pour fournir en son sein à la fois ledit épaulement de mise en prise (30) et lesdites parois (31), ledit trou étant en communication avec une ouverture (29) ménagée dans ladite partie de coiffe (13), intérieurement à celle-ci, pour permettre à ladite saillie (26) d'être insérée à travers elle durant le mouvement de pivotement de ladite partie de coiffe (13).
